# EUROPEAN PATENT APPLICATION

(11) **EP 4 287 446 A1**
(43) Date of publication of application: **06.12.2023**
(21) Application number: 22745695.1
(22) Date of filing: 20.01.2022
(51) Int. Cl.: H02J 7/00, H02J 1/00

(54) **POWER SUPPLY DEVICE**

(30) Priority: 27.01.2021 JP 2021011502
(71) Applicant: Panasonic Energy Co., Ltd., Osaka 570-8511 (JP)
(72) Inventor: OHASHI, Osamu, Kadoma-shi, Osaka 571-0057 (JP)
(74) Representative: Novagraaf International SA
(86) International application number: PCT/JP2022/001888
(87) International publication number: WO 2022/163474

(57) **Abstract**

Power consumption of an activation circuit in a low power consumption mode is reduced. A power supply device includes: a battery module (10) including chargeable battery cells (1); a battery connection circuit (2) connected to the battery module (10) and being switchable to a low power consumption mode; an activation circuit (3) configured to activate the battery connection circuit (2); and an activation switch (4) connected to the activation circuit (3) and configured to output an activation signal. The activation circuit (3) includes: an input transistor (5) having a base and emitter connected to the activation switch (4) between the base and emitter, the input transistor (5) being configured to be switched to an off state in response to an on-signal from the activation switch (4); and an FET output circuit (6) connected to an output side of the input transistor (5) and configured to output an activation signal to the battery connection circuit (2) in a low power consumption state by switching the input transistor (5) from turned on to turned off.

## Description

### TECHNICAL FIELD

The present invention relates to a power supply device including a battery module including battery cells, and particularly to a power supply device in which a battery connection circuit switchable to a low power consumption mode is connected to the battery module.

### BACKGROUND ART

A power supply device in which battery cells are connected in series or in parallel to one another detects a state of each battery cell and controls a charging current or a discharging current to protect the battery cells. The power supply device includes a battery connection circuit configured to detect a voltage, a temperature, and a current of each battery cell constituting the battery module, to perform arithmetic processing on the detected signal, and to control charging or discharging of the battery module. In order to prevent the battery from being over-discharged, while the device is not used, for example, a shutdown state, the power supply device is switched to a low power consumption mode in which the power consumption of the battery connection circuit is reduced as much as possible. The power supply device requires an activation circuit that reactivates the battery connection circuit in the low power consumption mode and switches the battery connection circuit to an operation mode.

For example, as disclosed in PTL 1, the activation circuit may have a circuit configuration in which an activation signal is output by pressing a push-button of a manual operation switch. In the activation circuit, a switch is connected between a power supply circuit and a ground line via a current limiting resistor, and the activation signal is output in response to an on-signal from the switch. In the activation circuit of the circuit configuration, the activation signal is output from a node at which a load resistor is connected to the switch by switching the switch from being turned off to being turned on. This causes a problem that a contact current flows through the switch via a load resistor in an on-state and a voltage between contacts rises to a power supply voltage in an off state. The problem may be solved by forming a circuit configuration in which the switch is connected to a gate of an FET, a gate voltage of the FET is controlled by turning on or off the switch, and the FET is turned on or off by the switch.

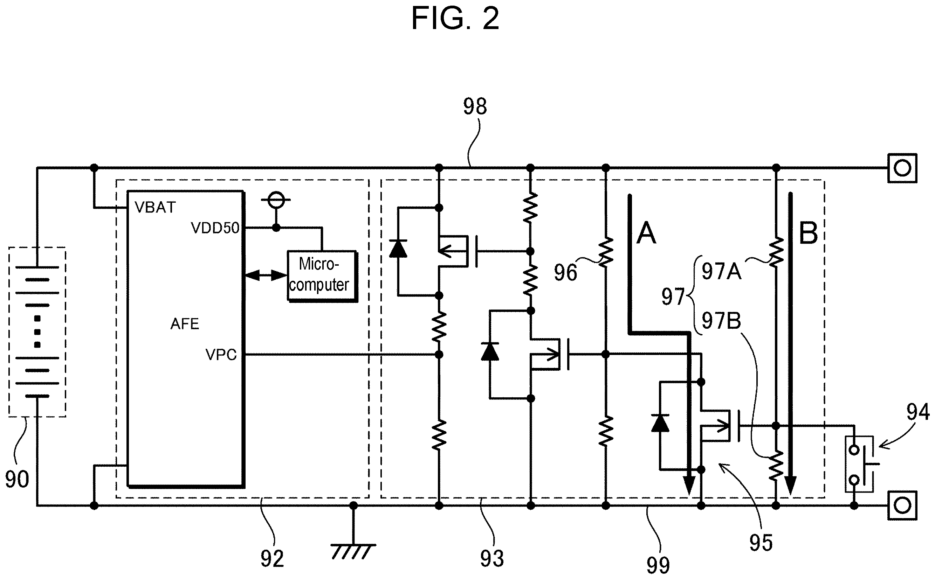

Specifically, the problem may be solved by forming a circuit configuration in which activation switch 94 is connected between a gate of input FET 95 and ground line 99, and input FET 95 is switched on or off by activation switch 94 as shown in FIG. 2. As activation switch 94, a normally-off manual switch that is turned on while a push-button is pressed and turned off while the push-button is not pressed is used. Activation switch 94 is turned on by pressing the push-button by a user at a timing of activating battery connection circuit 92 in a low power consumption mode. When the normally-off switch is turned on by pressing the push-button, input FET 95 is switched from on to off, and input FET 95 is kept in the on state in a state where the push-button is not pressed. Input FET 95 in the on state is connected to power supply line 98 via load resistor 96, and a drain current flows between the drain and the source as indicated by arrow A. Further, in order to keep input FET 95 in the on state, a bias current indicated by arrow B flows through bias resistor 97 connected to the gate for keeping the gate voltage at a predetermined voltage. The drain current or the bias current can be reduced by increasing an electric resistance of load resistor 96 or bias resistor 97, but the increase of the electric resistance may reduce stability of its operation.

### Citation List

### Patent Literature

PTL 1: Domestic Re-publication of PCT Patent Application No. 2006/059511

### SUMMARY OF THE INVENTION

The invention is implemented to solve the above problem, and an object of the invention is to provide a power supply device capable of reducing power consumption of an activation circuit in a low power consumption mode and further reducing the power consumption in this state.

A power supply device according to an aspect of the invention includes: a battery module including chargeable battery cells; a battery connection circuit connected to the battery module, the battery connection circuit being switchable to a low power consumption mode; an activation circuit configured to activate the battery connection circuit; and an activation switch connected to the activation circuit and configured to output an activation signal. The activation circuit includes: an input transistor having a base and an emitter connected to the activation switch between the base and the emitter; and an FET output circuit connected to an output side of the input transistor. The input transistor is configured to be switched to being turned off in response to an on-signal from the activation switch. The FET output circuit is configured to output the activation signal to the battery connection circuit in a low power consumption state by switching the input transistor from being turned on to being turned off.

The power supply device according to the invention reduces power consumption of an activation circuit to save power.

### BRIEF DESCRIPTION OF DRAWINGS

FIG. 1 is a circuit diagram of a power supply device according to an exemplary embodiment of the invention.
FIG. 2 is a circuit diagram of a conventional power supply device.

### DESCRIPTION OF EMBODIMENTS

A power supply device according to an exemplary embodiment of the invention includes: a battery module including chargeable battery cells; a battery connection circuit connected to the battery module, the battery connection circuit being switchable to a low power consumption mode; an activation circuit configured to activate the battery connection circuit; and an activation switch connected to the activation circuit and configured to output an activation signal. The activation circuit includes: an input transistor having a base and an emitter connected to the activation switch between the base and the emitter; and an FET output circuit connected to an output side of the input transistor. The input transistor is configured to be switched to being turned off in response to an on-signal from the activation switch. The FET output circuit is configured to output the activation signal to the battery connection circuit in a low power consumption state by switching the input transistor from being turned on to being turned off.

In the activation circuit of the power supply device described above, the input transistor that is a bipolar transistor is used as a semiconductor switching element that is switched on or off by the activation switch. The transistor is switched to being turned on by a current flowing through the base thereof, and thus has a larger power consumption on the input side than an FET, which can be turned on without a current flowing through the gate thereof. Based on the property, for the purpose of saving power, an FET, which is turned on without a current flowing through the gate thereof, is used instead of a transistor, which consumes power with a base current flowing through while being turned on.

FIG. 2 shows activation circuit 93 in which the semiconductor switching element that is turned on and off by activation switch 94 is an FET. In activation circuit 93, activation switch 94 is connected between a gate of input FET 95 and ground line 99. When a push-button of activation switch 94 is pressed, activation circuit 93 turns on activation switch 94 to switch input FET 95 from being turned on to being turned off to output the activation signal. Since activation circuit 93 turns on input FET 95 when activation switch 94 is turned on, input FET 95 maintains to be turned on in a normal state where activation switch 94 is not pressed. In input FET 95 in the on state, a drain current flows from a drain to a source as indicated by arrow A, and a bias current flows through bias resistor 97 from power supply line 98 to ground line 99 as indicated by arrow B. The drain current may be reduced by increasing an electric resistance of load resistor 96, and the bias current of bias resistor 97 may be reduced by increasing an electric resistance of bias resistor 97. However, the electric resistance of load resistor 96 or bias resistor 97 with excessively large resistance may cause the drain current to be easily affected by noise and may not ensure stable operation.

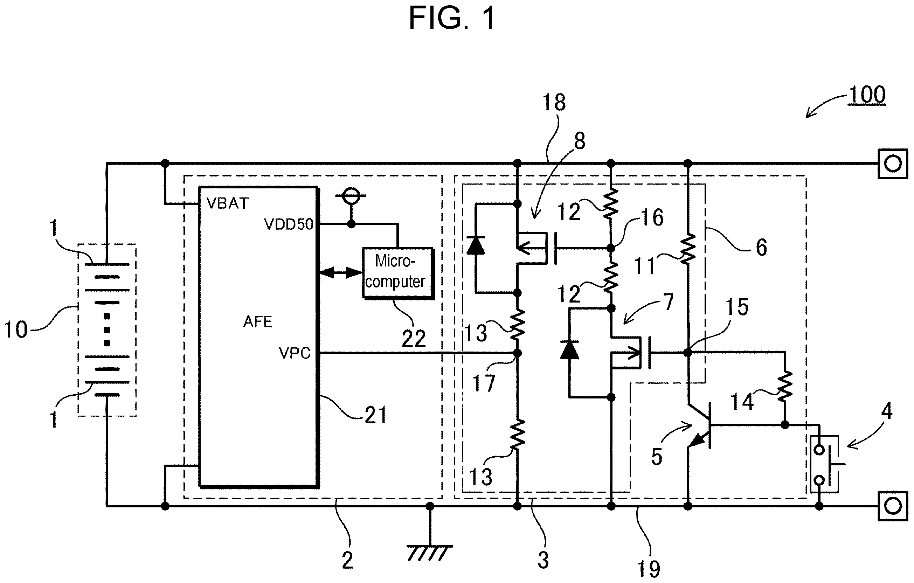

In activation circuit 3 shown in FIG. 1 of a power supply device according to a first aspect of the invention, a semiconductor switching element to which activation switch 4 is connected is input transistor 5, which is turned on by a current flowing to the base thereof. Activation circuit 3 having this circuit configuration reduces a bias current and reduces wasteful power consumption by input transistor 5 instead of an FET.

The input transistor is an element configured to amplify a current, and a product of a base current and a current gain is a collector current. Therefore, the collector current of the input transistor which is turned on is set to be the same as a drain current of an input FET. The base current is provided by dividing the drain current by the current gain, thus being extremely small. For example, activation circuit 93 shown in FIG. 2 can output an activation signal with the drain current of input FET 95 which is turned on is about 30 µA. On the other hand, activation circuit 3 shown in FIG. 1, which has input transistor 5 as the input FET, can output the activation signal with the collector current of input transistor 5 set to 30 µA, which is the same as the drain current of input FET 95 of activation circuit 93 shown in FIG. 2. In this state, the base current of input transistor 5 is reduced to the value provided by dividing the collector current by the current gain. Therefore, a bipolar transistor with the gain of 100 times as input transistor 5 significantly reduces the base current to 30/100 µA, that is, 0.3 µA. Since the current gain of the bipolar transistor generally ranges from about 100 to 500, activation circuit 3 shown in FIG. 1 reduces the base current to an almost negligible value by the transistor instead of the FET. Therefore, activation circuit 3 shown in FIG. 1 reduces consumption current by about 50% by setting the collector current of input transistor 5 to the same current value as that of the drain current of input FET 95 of activation circuit 93 shown in FIG. 2.

The power supply device described above has a feature that a withstand voltage of an activation switch can be reduced since the activation switch is connected between a base and an emitter of the input transistor. This is because the transistor maintains the on state with a low base voltage and an extremely small base current provided by dividing the collector current by the current gain. Therefore, a small-sized switch having a low withstand voltage can be used as the activation switch, and a feature that the small-sized activation switch can be disposed in a narrow space is also implemented.

In a power supply device according to a second aspect of the invention, the battery connection circuit includes: a detection circuit configured to detect at least one of a voltage, a temperature, and a current of the battery cells of the battery module, to convert a detected analog signal into a digital signal, and output the digital signal; and a microcomputer configured to perform arithmetic processing on the digital signal input from the detection circuit.

The power supply device has a feature that the battery connection circuit detects a voltage, a current, a temperature, and the like of the battery cell constituting the battery module to prevent the battery cell from being overcharged or over-discharged, and further detects a battery temperature to enable charging or discharging in a safe state.

A power supply device according to a third aspect of the invention may have, as a circuit configuration of an FET output circuit, a circuit including: a first FET having a gate connected to the input transistor, the first FET being configured to be switched from being turned off to on by switching the input transistor from on to off; and a second FET whose gate is connected to the first FET, the second FET being configured to be switched from being turned off to being turned on by switching the first FET from being turned off to being turned on. The second FET is switched from being turned off to being turned on to output the activation signal to the battery connection circuit.

In a power supply device according to a fourth aspect of the invention, the activation switch is a normally-off manual switch. In a power supply device according to a fifth aspect of the invention, the activation switch is a push-button switch configured to output an activation signal of an on state in a pressed state.

A power supply device according to a sixth aspect of the invention has a circuit configuration in which the activation circuit includes a base resistor connected to the base of the input transistor and a power supply line and configured to allow a base current for turning on the input transistor to flow through, and the activation switch is connected between the base of the input transistor and a ground line, and the input transistor is switched from being turned on to being turned off in response to the on-signal from the activation switch.

A power supply device according to a seventh aspect of the invention has a circuit configuration in which the activation circuit includes a first load resistor connected to the output side of the input transistor, and a node at which the first load resistor is connected to the input transistor is connected to a gate of the first FET, and the first FET is switched from being turned off to being turned on by switching the input transistor from being turned on to being turned off.

A power supply device according to an eighth aspect of the invention may have a circuit configuration in which a first load resistor is connected to a collector of the input transistor.

A power supply device according to a ninth aspect of the invention may have a circuit configuration in which the activation circuit includes a second load resistor connected to an output side of the first FET, and a gate of the second FET is connected to the second load resistor, and the second FET is switched from being turned off to being turned on by switching the first FET from being turned off to being turned on.

A power supply device according to a tenth aspect of the invention may have a circuit configuration in which a second load resistor is connected to a drain of the first FET.

A power supply device according to an eleventh aspect of the invention may have a circuit configuration in which the activation circuit includes a third load resistor connected to an output side of the second FET, and the third load resistor outputs the activation signal to the battery connection circuit by switching the second FET from being turned off to being turned on.

In a power supply device according to a twelfth aspect of the invention, a third load resistor may be connected to a source of a second FET.

Hereinafter, the invention will be described in detail with reference to the drawings. In the following description, terms indicating specific directions and positions (for example, "up", "down", and other terms including the terms) are used as necessary, but the use of the terms is intended to facilitate understanding of the invention with reference to the drawings, and the technical scope of the invention is not limited by meanings of the terms. Parts of the same reference numerals appearing in a plurality of drawings indicate the same or equivalent parts or members.

Embodiments to be described later are specific examples of a technical idea of the invention, and the invention is not limited to the following embodiments. Dimensions, materials, shapes, relative arrangements, and the like of components to be described later are not intended to limit the scope of the invention only thereto and are intended to be exemplified unless otherwise specified. Contents described in one embodiment and one example can also be applied to other embodiments and examples. The size, positional relation, and the like of the members shown in the drawings may be exaggerated in order to clarify the description.

### Power Supply Device 100

Power supply device 100 shown in FIG. 1 includes: battery module 10 including chargeable battery cells 1 connected in series or in parallel to one another; battery connection circuit 2 connected to battery module 10; activation circuit 3 of battery connection circuit 2; and activation switch 4 connected to activation circuit 3.

### Battery Module 10

In battery module 10, battery cells 1 are connected in series or in parallel to one another to increase a charge and discharge capacity. Battery module 10 is set to have optimum voltage and charge and discharge capacity for use of power supply device 100 by the number of battery cells 1 in parallel and the number of battery cells 1 connected in parallel. Power supply device 100 is used in various use, for example, a power storage device or a power supply device for traveling a vehicle. A power supply device used in the power storage device has an output voltage of battery module 10 of, for example, 40 V to 100 V, and the power supply device for traveling a vehicle has the output voltage of battery module 10 of 200 V to 400 V. Battery cell 1 may preferably be a non-aqueous electrolyte secondary battery such as a lithium-ion secondary battery or a lithium polymer secondary battery, whose charge and discharge capacity can be increased with respect to weight and capacity, but battery cell 1 are not limited to lithium-ion secondary battery or lithium polymer secondary battery, and all other chargeable secondary batteries that are currently used or developed therefrom, for example, a nickel hydride battery or an individual battery, can be used.

### Battery Connection Circuit 2

Battery connection circuit 2 includes detection circuit 21 configured to detect a state of battery module 10, that is, battery information, and microcomputer 22 configured to perform arithmetic processing on a digital signal output from detection circuit 21. The battery information detected by detection circuit 21 is, for example, a voltage or temperature of battery cells 1 constituting battery module 10, a current of battery module 10, or the like, and detection circuit 21 detects the battery information as an analog signal. Detection circuit 21 converts the detected analog signal into a digital signal and outputs the digital signal to an external control circuit (not shown). Power supply device 100 in which battery connection circuit 2 detects the voltage and the temperature of battery cells 1 and further detects the current of battery module 10 outputs the battery information to the external control circuit. In response, the external control circuit controls charging or discharging of battery module 10. Power supply device 100 charges and discharges battery module 10 while preventing battery cells 1 from being overcharged or over-discharged. Power supply device 100 including detection circuit 21 that detects the temperature of battery cells 1 has a feature that the temperature of battery cells 1 can be maintained at a predetermined temperature and safely charged or discharged. Power supply device 100 described above does not limit the battery information detected by battery connection circuit 2 as the voltage, the temperature, and the current, and can detect, for example, a remaining capacity of each battery cell 1 as the battery information and output the battery information to outside.

Detection circuit 21 that detects the voltage or the current includes, although not shown, a voltage detection circuit configured to detect the voltage of battery cells 1 constituting battery module 10, a temperature detection circuit configured to detect a temperature of particular battery cell 1, a current detection circuit configured to detect a charging or discharging current of battery module 10, and an A/D converter configured to convert analog signals detected by the detection circuits into digital signals. Power supply device 100 according to the invention does not limit the circuit configuration of detection circuit 21 of battery connection circuit 2, and may be a detection circuit configured to detect other parameters of battery module 10.

Microcomputer 22 is configured to perform the arithmetic processing on the digital signals input from detection circuit 21. The arithmetic processing of microcomputer 22 may compare the input detection voltage of battery cells 1 with a minimum voltage and a maximum voltage, output a signal specifying a maximum charging or discharging current of battery module 10 to a main control circuit (not shown), or computes a remaining capacity of battery module 10 or battery cells 1 based on the voltage and the current of battery module 10 or battery cells 1, output the remaining capacity to the external control circuit, or display the remaining capacity of the battery by lighting an LED.

Battery connection circuit 2 is configured to detect a state of not being used for charging or discharging for a predetermined time or to detect a signal from outside, and to be switched to a low power consumption mode to reduce wasteful power consumption. In the low power consumption mode, battery connection circuit 2 is reactivated and returns to an operation state in response to an activation signal input from activation circuit 3. Battery connection circuit 2 is activated from a shutdown state in response to, for example, a trigger signal input from activation circuit 3. Battery connection circuit 2 sets both detection circuit 21 and microcomputer 22 to the low power consumption mode to reduce wasteful power consumption. Battery connection circuit 2 may also reduce the power consumption by setting one of detection circuit 21 and microcomputer 22 to the low power consumption mode.

Detection circuit 21 stops supplying power from battery module 10 in the low power consumption mode, and microcomputer 22 is switched to the shutdown state, a pause state, or a sleep state in the low power consumption mode. In the present description, the "low power consumption mode" means all states in which the power consumption is smaller than a normal operation state, and is not necessarily specified as the shutdown state, the pause state, the sleep state, or the like. Battery connection circuit 2 in which both detection circuit 21 and microcomputer 22 are in the low power consumption mode activates detection circuit 21 by outputting the activation signal from activation circuit 3 to detection circuit 21, and activates microcomputer 22 by outputting the activation signal from activated detection circuit 21 to microcomputer 22. Battery connection circuit 2 may reactivate both detection circuit 21 and microcomputer 22 by inputting the activation signal from activation circuit 3 to both detection circuit 21 and microcomputer 22.

### Activation Circuit 3

Activation circuit 3 reactivates battery connection circuit 2 from the low power consumption mode and switches battery connection circuit 2 to the operation mode in response to an on/off-signal input from activation switch 4. Activation circuit 3 includes input transistor 5 having a base connected to ground line 19 via activation switch 4, and FET output circuit 6 configured to receive a [High] or [Low] signal from input transistor 5 and to output the activation signal. FET output circuit 6 is configured to output the activation signal when input transistor 5 is switched from being turned on to being turned off.

### Activation Switch 4

Activation switch 4 is a normally-off manual switch, and a push-button switch configured to be turned on while a push-button is pressed can be used. As activation switch 4, instead of the push-button switch, all other switches that can be switched to being turned on or off by being operated by a user, for example, a proximity switch can be used.

### Input Transistor 5

Input transistor 5 is a bipolar transistor and is configured to output the "Low" signal while activation switch 4 is pressed. The base and emitter of input transistor 5 is connected to activation switch 4 between the base and emitter. Input transistor 5 is switched to an off state where activation switch 4 in the on state connects the base to the emitter, thereby allowing no base current to flow. In activation circuit 3 shown in FIG. 1, base resistor 14 is connected between the base and a collector of input transistor 5. In an off state of activation switch 4, base resistor 14 supplies a current from the collector to the base and maintains input transistor 5 in an on state. Activation switch 4 is a normally-off switch, and is turned off to maintain input transistor 5 in the on state while the push-button is not pressed. Base resistor 14 is an electric resistor that allows the base current turning on input transistor 5 in the off state of activation switch 4 to flow through.

Input transistor 5 controls a collector current by the base current. The product of the base current and a current gain is the collector current. The current gain of an ordinary general transistor is about 100 to 500. Therefore, input transistor 5 sets the base current to 1/100 to 1/500 of the collector current. For example, input transistor 5 having the collector current of 50 µA to 100 µA and the current gain of 100 sets the base current to 0.5 µA to 1 µA. Input transistor 5 sets the collector current of input transistor 5 to 50 µA as a resistance that makes the base current 0.5 µA to 1 µA.

Input transistor 5 reducing the base current to 1/100 to 1/500 of the collector current is effective for remarkably reducing power consumption of activation circuit 3. In the low power consumption mode of battery connection circuit 2, since input transistor 5 is maintained in the on state, activation circuit 3 is required to reduce the power consumption of input transistor 5 in the on state to reduce the power consumption of activation circuit 3 in the low power consumption mode of battery connection circuit 2. This is because, in the low power consumption mode of battery connection circuit 2, an operation power is supplied from battery module 10 to activation circuit 3, and thus activation circuit 3 consumes power of battery module 10. In the low power consumption mode of battery connection circuit 2, activation circuit 3 is maintained in an operation mode in which activation circuit 3 is capable of outputting the activation signal to battery connection circuit 2 in response to the signal from activation switch 4 to discharge battery module 10. The low power consumption mode is a mode set in which activation circuit 3 is not used for a long time, and time of the low power consumption mode is often considerably long. The power consumption of activation circuit 3 in this timing is accumulated and a total power that discharges the battery module 10 increases.

In conventional activation circuit 93 shown in FIG. 2, input FET 95 in the on state in the low power consumption mode causes, in addition to a drain current flowing between a drain and a source, a bias current to flow through bias resistor 97 that inputs an on-voltage to a gate of the FET. Bias resistor 97 includes series resistors of first bias resistor 97A and second bias resistor 97B that divide a voltage of battery module 90 and input an on-voltage to the gate. Bias resistor 97 may determine a gate voltage by a resistance ratio of first bias resistor 97A and second bias resistor 97B. In that case that an electric resistance of second bias resistor 97B connected between the gate and ground line 99 is large, a probability of input FET 95 erroneously operating under an external condition such as large external noise. An input impedance of the gate of the FET is significantly high, hardly preventing reliably the erroneous operation due to the external noise or the like in high-resistance bias resistor 97. Bias resistor 97 is normally connected to a positive side and a negative side of battery module 90 to allow the bias current to flow through to discharge battery module 90. Therefore, in order to reduce wasteful power consumption in the low power consumption mode, it is important to reduce the bias current.

In activation circuit 3 shown in FIG. 1, the collector current and the base current flow through input transistor 5 that is turned on in the low power consumption mode. The collector current of input transistor 5 corresponds to the drain current of activation circuit 93 shown in FIG. 2, and the base current corresponds to the bias current of activation circuit 93 shown in FIG. 2. Since activation circuit 93 shown in FIG. A provides a stable operation by setting the drain current and the bias current to substantially the same current, a current twice the drain current continuously discharges battery module 90 in the low power consumption mode. Since activation circuit 3 shown in FIG. 1 reduces the base current to an almost negligible current value, that is, 1/100 to 1/500 of the collector current, battery module 10 has only the collector current in the low power consumption mode, thus reducing wasteful discharge of battery module 10 by 50% as compared with that of activation circuit 93 shown in FIG. A. As described above, activation circuit 3 shown in FIG. 1 implements an extremely advantageous effect that the power consumption of battery module 10 in the low power consumption mode is reduced by as much as 50% while using a bipolar transistor, which is turned on in response to the base current, instead of the FET, which is an energy-saving element that can be switched on substantially without a current flowing through the gate. This effect is implemented by utilizing a current amplification, which is specific to the bipolar transistor, to reduce a wasteful bias current of the bias resistor of the FET whose electric resistance is difficult to be reduced, in order to stably operate the FET, which has a high input impedance.

In input transistor 5 described above, in order to output the "Low" signal in the on state and the "High" signal in the off state to FET output circuit 6, first load resistor 11 is connected to a collector, and node 15 at which the collector is connected to first load resistor 11 is connected to the gate of first FET 7. In this description, "Low" and "High" are based on ground line 19. First load resistor 11 has a resistance causing the collector current of input transistor 5 in the on state to be, for example, 20 µA to 50 µA. When activation switch 4 is switched from being turned off to being turned on, input transistor 5 is switched from being turned on to being turned off and outputs the "High" signal to FET output circuit 6 via first load resistor 11. First load resistor 11 divides a total voltage of battery module 10 by base resistor 14 of input transistor 5 in the off state and outputs the divided voltage to FET output circuit 6.

### FET Output Circuit 6

The "High" signal output from the collector of input transistor 5 is output as a stable activation signal of "High" to battery connection circuit 2 via FET output circuit 6. FET output circuit 6 outputs the "High" signal to battery connection circuit 2 with low output impedance without inverting "High" and "Low" of the "High" signal input from input transistor 5. FET output circuit 6 includes first FET 7 connected to an output side of input transistor 5 and second FET 8 connected to an output side of first FET 7. FET output circuit 6 reduces the power consumption by turning off both first FET 7 and second FET 8 in a normal state where activation switch 4 is not pressed, and outputs the "High" signal input from input transistor 5 to battery connection circuit 2 by turning on both first FET 7 and second FET 8 in a state where activation switch 4 is pressed. First FET 7 is an n-channel FET, has a source connected to ground line 19, and is turned on by the "High" signal with respect to ground line 19. Second FET 8 is a p-channel FET and has a source connected to power supply line 18 that is a positive side of battery module 10, and thus an on-voltage is input to a gate in response to the "Low" signal with respect to ground line 19, and second FET 8 is turned on.

### First FET 7

First FET 7 is turned off when the a "Low" signal is input from input transistor 5 to the gate thereof, and is turned on when the "High" signal is input. First FET 7 outputs a "High" signal in the off state, and outputs a "Low" signal in the on state. Since input transistor 5 outputs a "Low" signal in the state where activation switch 4 is not pressed and outputs a "High" signal in the state where activation switch 4 is pressed, first FET 7 outputs a "High" signal in the state where activation switch 4 is not pressed, and outputs a "Low" signal in the state where activation switch 4 is pressed. First FET 7 has the gate connected to the collector of input transistor 5, a drain connected to power supply line 18 of battery module 10 via second load resistors 12, and the source connected to ground line 19. When first FET 7 is in an on state, second load resistors 12 divide the voltage of battery module 10 and input an on-voltage to a gate of second FET 8. When first FET 7 is in an off state, second load resistors 12 connect the gate of second FET 8 to the positive side of battery module 10, that is, a source of second FET 8, and input an off-voltage to the gate.

### Second FET 8

Second FET 8 is a p-channel FET, and has the source connected to power supply line 18 that is the positive side of battery module 10, the gate connected to intermediate node 16 at which second load resistors 12 are connected to each other, and a drain connected to ground line 19 via third load resistors 13. Second FET 8 is turned on when first FET 7 is in the on state. This is because, in this state, second load resistors 12 divide the voltage of power supply line 18 and inputs an on-voltage to the gate of second FET 8. Second FET 8 in the on state divides the voltage of power supply line 18 by third load resistors 13 connected between second FET 8 and ground line 19 and outputs the activation signal of the "High" signal to battery connection circuit 2. Second FET 8 is turned off in the off state of first FET 7. This is because first FET 7 disconnects second load resistors 12 from ground line 19 and connects the gate of second FET 8 to the source. Second FET 8 in the off state disconnects third load resistors 13 from the positive side of battery module 10, and sets a voltage of intermediate node 17 at which third load resistors 13 are connected to each other to "Low".

A drain current of first FET 7 in the on state is determined by electric resistances of second load resistors 12, and a drain current of second FET 8 in the on state is determined by resistance values of third load resistors 13, and thus the resistance values of second load resistors 12 and third load resistors 13 are set to values with which the collector currents of the respective FETs in the on state are predetermined values. In a case where the electric resistances of second load resistors 12 are too high, the "High" or "Low" signal cannot be stably output to second FET 8. If the electric resistances of second load resistors 12 are too low, the collector current of the first FET 7 increases and the power consumption increases. Therefore, second load resistors 12 are set to an electric resistance with which consumption current is reduced as much as possible while stably outputting an on or off signal to second FET 8. The electric resistances of third load resistors 13 affect an output impedance of FET output circuit 6. Third load resistors 13 are set to an electric resistance with which the output impedance of FET output circuit 6 is lowered and the activation signal is stably output to battery connection circuit 2.

Power supply device 100 described above reactivates battery connection circuit 2 in the low power consumption mode by following operations.

In the low power consumption mode, in a state of not being used for a long time, battery connection circuit 2 is switched to the low power consumption mode to reduce the power consumption. In this state, activation switch 4 is in the off state, input transistor 5 of activation circuit 3 is in the on state, first FET 7 is in the off state, and second FET 8 is in the off state. Although the collector current flows through input transistor 5 in the on state, the base current becomes an almost negligible current and the power consumption is significantly reduced. First FET 7 and second FET 8 are in the off state, and the drain current is interrupted.

At a timing of reactivating battery connection circuit 2, a user presses activation switch 4 to output an on-signal to activation circuit 3. In response to the on-signal from activation switch 4, the base of input transistor 5 is connected to ground line 19, that is, the emitter, and input transistor 5 is switched to the off state. Input transistor 5 in the off state inputs the on-voltage to the gate of first FET 7 via first load resistor 11 to switch first FET 7 to the on state. First FET 7 switched to the on state connects second load resistors 12 to ground line 19, inputs the on-voltage to the gate of second FET 8 from the intermediate node 16 at which second load resistors 12 are connected to each other, and switches second FET 8 to the on state. Second FET 8 switched to the on state outputs the activation signal of "High" to battery connection circuit 2 from the intermediate node 17 at which third load resistors 13 are connected to each other. Battery connection circuit 2 to which the activation signal of "High" is input is switched from the low power consumption mode to the operation mode to be in a normal operation state. Battery connection circuit 2 shown in FIG. 1 includes detection circuit 21 and microcomputer 22, and activation circuit 3 outputs the activation signal to detection circuit 21 and detection circuit 21 outputs the activation signal to microcomputer 22 to reactivate microcomputer 22 from the low power consumption mode.

### INDUSTRIAL APPLICABILITY

A power supply device according to the invention is effectively used in a device that is in the low power consumption mode in an unused state to reduce power consumption and is reactivated by pressing an activation switch in a used state.

### REFERENCE MARKS IN THE DRAWINGS

- 100:: power supply device
- 1:: battery cell
- 2:: battery connection circuit
- 3:: activation circuit
- 4:: activation switch
- 5:: input transistor
- 6:: FET output circuit
- 7:: first FET
- 8:: second FET
- 10:: battery module
- 11:: first load resistor
- 12:: second load resistor
- 13:: third load resistor
- 14:: base resistor
- 15:: connection point
- 16:: intermediate connection point
- 17:: intermediate connection point
- 18:: power supply line
- 19:: ground line
- 21:: detection circuit
- 22:: microcomputer
- 90:: battery module
- 92:: battery connection circuit
- 93:: activation circuit
- 94:: activation switch
- 95:: input FET
- 96:: load resistor
- 97:: bias resistor
- 97A:: first bias resistor
- 97B:: second bias resistor
- 98:: power supply line
- 99:: ground line

## Claims

1. A power supply device comprising:
a battery module including a plurality of chargeable battery cells;
a battery connection circuit connected to the battery module, the battery connection circuit being switchable to a low power consumption mode;
an activation circuit configured to activate the battery connection circuit; and
an activation switch connected to the activation circuit and configured to output an activation signal, wherein
the activation circuit includes:
an input transistor having a base and an emitter connected to the activation switch between the base and the emitter, the input transistor being configured to be switched to being turned off in response to an on-signal from the activation switch; and
an FET output circuit connected to an output side of the input transistor, the FET output circuit being configured to output the activation signal to the battery connection circuit in a low power consumption state by switching the input transistor from being turned on to being turned off.

2. The power supply device according to claim 1, wherein the battery connection circuit includes:
a detection circuit configured to detect at least one of a voltage, a temperature, and a current of the battery cells of the battery module, convert a detected analog signal into a digital signal, and output the digital signal; and
a microcomputer configured to perform arithmetic processing on the digital signal input from the detection circuit.

3. The power supply device according to claim 1 or 2, wherein
the FET output circuit includes:
a first FET having a gate connected to the input transistor, the first FET being configured to be switched from being turned off to being turned on by switching the input transistor from being turned on to being turned off; and
a second FET having a gate connected to the first FET, the second FET being configured to be switched from being turned off to being turned on by switching the first FET from being turned off to being turned on, and
the second FET is configured to be switched from being turned off to being turned on to output the activation signal to the battery connection circuit to activate the battery connection circuit.

4. The power supply device according to any one of claims 1 to 3, wherein the activation switch is a normally-off manual switch.

5. The power supply device according to claim 4, wherein the activation switch is a push-button switch configured to output an activation signal of an on-state while being pressed.

6. The power supply device according to any one of claims 1 to 5, wherein
the activation circuit includes a base resistor connected to the base of the input transistor and a power supply line, the activation circuit being configured to allow a base current to flow to turn on the input transistor, and
the activation switch is connected between the base of the input transistor and a ground line, and the input transistor is configured to be switched from being turned off to being turned on in response to the on-signal from the activation switch.

7. The power supply device according to any one of claims 1 to 6, wherein
the activation circuit includes a first load resistor connected to the output side of the input transistor, and
a node at which the first load resistor is connected to the input transistor is connected to a gate of the first FET, and the first FET is configured to be switched from being turned off to being turned on by switching the input transistor from being turned off to being turned on.

8. The power supply device according to claim 7, wherein the first load resistor is connected to a collector of the input transistor.

9. The power supply device according to any one of claims 1 to 8, wherein
the activation circuit includes a second load resistor connected to an output side of the first FET, and
a gate of the second FET is connected to the second load resistor, and the second FET is configured to be switched from being turned off to being turned on by switching the first FET from being turned off to being turned on.

10. The power supply device according to claim 9, wherein the second load resistor is connected to a drain of the first FET.

11. The power supply device according to any one of claims 1 to 10, wherein
the activation circuit includes a third load resistor connected to an output side of the second FET, and
the third load resistor is configured to output the activation signal to the battery connection circuit by switching the second FET from being turned off to being turned on.

12. The power supply device according to claim 11, wherein the third load resistor is connected to a source of the second FET.

13. The power supply device according to any one of claims 1 to 12, wherein the battery connection circuit is configured to be activated from a shutdown state in response to a trigger signal input from the activation circuit.
